# EUROPÄISCHE PATENTSCHRIFT

(11) **EP 2 922 610 B1**
(45) Veröffentlichungstag und Bekanntmachung des Hinweises auf die Patenterteilung: **21.09.2016**
(21) Anmeldenummer: 13779751.0
(22) Anmeldetag: 23.09.2013
(51) Int. Cl.: B01D 46/00, B01D 46/10, B01D 46/52, B01D 29/01, B01D 29/07

(54) **VERFAHREN UND VORRICHTUNG ZUM HERSTELLEN EINES KONTURIERTEN PLISSIERTEN FILTERELEMENTES**
METHOD AND DEVICE FOR PRODUCING A CONTOURED PLEATED FILTER ELEMENT
PROCÉDÉ ET DISPOSITIF DE FABRICATION D'UN ÉLÉMENT FILTRANT PLISSÉ DOTÉ D'UN CONTOUR

(30) Priorität: 22.11.2012 DE 102012022769
(43) Veröffentlichungstag der Anmeldung: 30.09.2015
(73) Patentinhaber: Sefar AG, 9140 Heiden (CH)
(72) Erfinder: DÜR, Hansjörg, A-6858 Schwarzach (AT)
(74) Vertreter: Wunderlich, Rainer
(86) Internationale Anmeldenummer: PCT/EP2013/069686
(87) Internationale Veröffentlichungsnummer: WO 2014/079606

(56) Entgegenhaltungen:
- EP-A1- 1 136 112
- DE-B- 1 093 188
- DE-B1- 2 807 546

## Beschreibung

Die Erfindung betrifft ein Verfahren zum Herstellen eines konturierten plissierten Filterelementes, bei welchem ein plissiertes Filtermedium mit einem Faltenmuster zwischen einem Gegenhalter und einem Stempel formgenau eingespannt wird, wobei der Gegenhalter und der Stempel eine an das Faltenmuster angepasste Oberflächenstruktur und jeweils einen Seitenrand aufweisen, welcher einer gewünschten Kontur des herzustellenden Filterelementes entspricht, und das eingespannte Filterelement entlang dem Seitenrand aus dem Filtermedium mit der gewünschten Kontur ausgeschnitten wird.

Die Erfindung betrifft weiterhin eine Vorrichtung zum Herstellen eines konturierten plissierten Filterelementes mit einem Stempel und einem Gegenhalter, welche zum formgenauen Einspannen des plissierten Filtermediums mit einer Oberflächenstruktur versehen sind, welche an ein Faltenmuster des plissierten Filtermediums angepasst ist und jeweils einen Seitenrand aufweist, welcher einer gewünschten Kontur des herzustellenden Filterelementes entspricht.

Plissierte, mit einem Zickzack-Faltenmuster versehene Filtermedien sind seit Langem bekannt. Diese werden insbesondere in verschiedensten Filtereinrichtungen eingesetzt, bei welchen eine relativ große Filterfläche bei einem geringen Platzbedarf benötigt wird.

Filtermedien werden üblicherweise als Rollenware oder in rechteckigen Bögen hergestellt, aus welchen dann für die konkrete Filtereinrichtung das benötigte Filterelement mit einer vorgegebenen Kontur ausgeschnitten wird. Aufgrund der Forminstabiment mit einer vorgegebenen Kontur ausgeschnitten wird. Aufgrund der Forminstabilität plissierter Filtermedien sind für ein formgenaues Ausschneiden von Filterelementen besondere Schneidvorrichtungen notwendig.

Aus der US 4,976,857 geht eine Vorrichtung und ein Verfahren hervor, bei welchen das plissierte Filtermedium als Ausgangsmaterial in einen gestauchten Zustand gebracht wird, in welchem dann das Filterelement durch ein rotierendes Schneidmesser ausgeschnitten wird. Aufgrund der Rückfederung des gefalteten Filtermateriales nach Wegfall der Stauchkraft treten jedoch Formänderungen und damit Abweichungen in der Randkontur des Filterelementes auf.

Ein gattungsgemäßes Verfahren und eine gattungsgemäße Vorrichtung sind aus der WO 01/70371 A1 bekannt. Das plissierte Filtermedium wird hierbei zwischen einem Stempel und einer Matrize axial eingespannt, wobei die Oberfläche von Stempel und Gegenhalter an das Faltenmuster des plissierten Filtermediums angepasst sind. Durch ein rotierendes zylindrisches Schneidmesser wird ein kreisscheibenförmiges Filterelement aus dem Filtermedium als Grundmaterial ausgeschnitten. Dieses bekannte Verfahren und die diesbezügliche Vorrichtung können also nur für rotationssymmetrische Formen eingesetzt werden. Trotz des Einspannens können durch das Schneiden in dem plissierten Filterelement Spannungen aufgebaut werden, welche nach dem Entnehmen des Filterelementes aus der Schneidvorrichtung zu unerwünschten Verformungen der Randkontur führen können. Dies erschwert eine Weiterverarbeitung des Filterelementes.

Ähnliche Verfahren, bei welchen plissierte Filterelemente mit rotierenden, topfförmigen Schneidmessern ausgeschnitten werden, gehen aus der DE 10 93 188 B oder DE 28 07 546 B1 hervor.

Der Erfindung liegt die **Aufgabe** zugrunde, ein Verfahren und eine Vorrichtung zum Herstellen eines Filterelementes aus einem plissierten Filtermedium anzugeben, mit welchen unterschiedlichste Konturen formgenau erzeugt werden können.

Die Erfindung wird zum einen durch ein Verfahren mit dem Merkmal des Anspruchs 1 und zum anderen durch eine Vorrichtung mit den Merkmalen des Anspruchs 8 gelöst. Bevorzugte Ausführungsformen der Erfindung sind in den jeweils abhängigen Ansprüchen angegeben.

Das erfindungsgemäße Verfahren ist dadurch gekennzeichnet, dass zum Beschneiden eine Schneidmatrize mit einer beliebigen, geschlossenen Ringkontur verwendet wird, welche der gewünschten Kontur des Filterelementes entspricht, und dass als Schneidmatrize ein Stanzmesser verwendet wird, welches zum Beschneiden ausschließlich axial zu dem eingespannten Filtermedium verfahren wird.

Ein Grundgedanke der Erfindung besteht darin, dass zum Beschneiden eine Schneidmatrize mit einer beliebigen geschlossenen Ringkontur verwendet wird, welche der gewünschten Kontur des Filterelementes entspricht. Grundsätzlich kann eine Zylinderform eingesetzt werden. Es ist nach der Erfindung jedoch nunmehr auch möglich, beliebige, nicht rotationssymmetrische Ringkonturen zu verwenden.

Nach der Erfindung ist es vorgesehen, dass als Schneidmatrize ein Stanzmesser verwendet wird, welches für einen sauberen Schnitt ausschließlich axial zu dem eingespannten Filtermedium verfahren wird. Es kann ein hohles, ringförmiges Stanzmesser mit einer beliebigen Ringwandkontur eingesetzt werden. Die axiale Schnittrichtung kann insbesondere einer axialen Spannrichtung zwischen Gegenhalter und Stempel entsprechen. Mit derartigen Stanzmessern sind einer Vielfalt der möglichen Konturen des zu bildenden Filterelementes praktisch keine Grenze mehr gesetzt. Eine Schneidkante des Stanzmessers kann in einer Ebene liegen oder dreidimensional gestaltet sein.

Das erfindungsgemäße Verfahren ist bevorzugt dadurch weitergebildet, dass ein Filtermedium aus einem thermoplastischen Material verwendet wird und das zum Besäumen ein Randsaum des beschnittenen Filterelementes unter Hitzeeinwirkung aufgeschmolzen und verfestigt wird, während das Filterelement zwischen dem Gegenhalter und dem Stempel eingespannt ist. Das Filterelement kann zwischen Gegenhalter und Stempel vollflächig eingespannt sein oder nur in einem Randbereich entlang des Schnittes, um eine unnötige Kompression des Filtermaterials zu vermeiden. Im Stempel kann ein Auswerfer vorgesehen sein, um in einer Auswerfeposition das Plissee auf der Gegenhalterseite zu halten und dann mit dem Auswerfer ausschieben zu können. Durch Anordnung eines Resteniederhalters kann der Stanzschnitt weiter verbessert werden.

Ein Aspekt der Erfindung besteht daher darin, ein Filtermedium aus einem thermoplastischen Material, insbesondere einem thermoplastischen Kunststoff, zu verwenden. Das Filtermedium als Ausgangsprodukt kann insbesondere ein Gewebe, ein Vlies, ein Gewirk, eine Membran oder eine Kombination aus diesen Materialien sein. Als Kunststoffmaterial kommen insbesondere Polyamid oder ein anderes thermoplastisches Polymer infrage.

Dabei ist es nach der Erfindung vorgesehen, den beschnittenen Rand des Filterelementes nach dem Beschneiden zu Besäumen, wobei das beschnittene Filterelement zwischen dem Stempel und dem Gegenhalter eingespannt verbleibt. Das Besäumen erfolgt dabei unter Hitzeeinwirkung, etwa durch Heizstrahler oder elektrisch beheizte Kontaktplatten. Durch dieses Aufschmelzen und anschließende Erstarren durch Abkühlen wird die Randkontur verfestigt und stabilisiert. Insbesondere bei einem Gewebe oder bei einem Schichtaufbau kann zudem ein Ausfasern des Randes vermieden werden. Durch ein zeitweises Erweichen des Filterelementes zumindest im Randbereich können sich auch beim Schneidvorgang gebildete Spannungen noch während der Einspannung zwischen Gegenhalter und Stempel abbauen. Hierdurch wird die Gefahr unerwünschter Verformungen nach Entnahme des Filterelementes aus der Schneidvorrichtung weiter vermindert.

Durch diese insgesamt stabilitätserhöhenden Maßnahmen am Randbereich kann das Filterelement nunmehr durch nahezu beliebige Schneidverfahren aus dem Filtermedium ausgeschnitten werden, ohne dass rotierende Schneidmesser mit relativ hoher Schnittgeschwindigkeit eingesetzt werden müssten.

Eine bevorzugte Ausführungsform der Erfindung besteht darin, dass zumindest eine Randkante des Gegenhalters oder des Stempels als eine Schneidkante ausgebildet ist. Beim axialen Verfahren der Schneidmatrize relativ zum eingespannten Filtermedium kann so das gegenüberliegende Spannteil, also der Gegenhalter oder der Stempel, mit einer schneidartigen Randkante am Außenumfang der plissierten Fläche versehen sein. Hierdurch bildet sich zwischen dieser Schneidkante und der Schneidkante und konturierten Schneidmatrize eine scherenartige Schnittbewegung aus, welche zu einem besonders sauberen Schnitt und damit einer formgenauen Randkante führt.

Beim Schneidvorgang kann der Andruck zwischen Gegenhalter und Stempel auf einen ersten hohen Wert eingestellt werden, so dass sich ein entsprechend kleiner Spaltabstand zwischen Gegenhalter und Stempel ergibt. Dies fördert ein sauberes Schnittergebnis.

Beim anschließenden Besäumen unter Hitzeeinwirkung kann die Andruckkraft auf einen zweiten niedrigeren Wert eingestellt werden, so dass sich auch ein größerer Spaltabstand zwischen Gegenhalter und Stempel einstellt. Dies ist vorteilhaft für das Besäumen.

Nach einer Ausführungsform der Erfindung ist es vorteilhaft, dass das Filterelement mit einer C-förmigen Kontur ausgebildet wird. Diese Kontur kann bogenförmig oder teilringförmig gestaltet sein. Das Faltenmuster kann in dieser Kontur nahezu beliebig angeordnet sein. Bevorzugt ist, dass die Falten parallel zueinander angeordnet sind und insbesondere sich nach einer Mitten- oder Symmetrieebene der C-förmigen Kontur ausrichten.

Weiterhin ist es nach der Erfindung vorteilhaft, dass zum Besäumen eine Heizeinrichtung und/oder ein Laser eingesetzt wird. Die Heizeinrichtung kann insbesondere einen oder mehrere Heizstrahler aufweisen. Auch sind elektrisch beheizte Kontaktelemente, induktiv beheizbare Kontaktelemente oder eine Brennereinrichtung mit einer oder mehreren Heizflammen geeignet. Zur Erzeugung der Hitzeeinwirkung kann auch ein Laser verwendet werden. Der Laser kann dabei in seinem Strahl gesteuert sein, um einem nicht linearen Verlauf des Randsaumes folgen zu können. Hierzu kann eine entsprechende Stelleinrichtung oder entsprechende Ablenkelemente an einem Laser vorgesehen und gesteuert sein.

Ein Besäumen könnte nach einer Variante der Erfindung auch dadurch erreicht werden, dass das eingespannte Filterelement zusammen mit dem Gegenhalter und dem Stempel beim Besäumen gedreht wird. Die Drehung kann dabei relativ zu der Heizeinrichtung erfolgen. Es ist also möglich, dass Gegenhalter und Stempel und/oder die Heizeinrichtung drehend angetrieben sind.

Weiterhin ist es nach der Erfindung bevorzugt, dass nach dem Besäumen der Gegenhalter und der Stempel axial auseinandergefahren werden und das beschnittene und besäumte Filterelement ausgeworfen wird. Das Auswerfen erfolgt nach einem Abkühlen und Verfestigen des aufgeschmolzenen Randbereiches. Das Auswerfen kann mittels eines Ausstoßers oder einer oder mehrerer Druckluftdüsen erfolgen. Ein Auswerfen kann auch über eine Entnahmeeinrichtung erfolgen, welche etwa einen Entnahmearm mit einer Ansaugeinrichtung aufweist.

Die erfindungsgemäße Vorrichtung ist dadurch gekennzeichnet, dass eine Schneidmatrize mit einer beliebigen, geschlossenen Ringkontur zum Ausschneiden des eingespannten Filterelementes entlang dem Seitenrand mit der gewünschten Kontur aus dem Filtermedium vorgesehen ist, und dass die Schneidmatrize als Stanzmesser ausgebildet ist, welches zum Beschneiden ausschließlich axial zu dem eingespannten Filtermedium verfahrbar ist.

Mit der Vorrichtung kann das vorbeschriebene Verfahren durchgeführt und die vorbeschriebenen Vorteile erreicht werden.

Bei einer Weiterbildung der erfindungsgemäßen Vorrichtung ist es bevorzugt, dass der Gegenhalter und/oder der Stempel in einem Rahmen axial bewegbar gelagert und mittels mindestens eines Stellzylinders axial verfahrbar sind. Durch die Verfahrbarkeit insbesondere von Gegenhalter und Stempel kann das Filterelement von einer Schneidposition zu einer Besäumposition verfahren werden, während es weiter eingespannt bleibt.

Eine Weiterbildung der erfindungsgemäßen Vorrichtung ist dadurch gekennzeichnet, dass eine Heizeinrichtung und/oder ein Laser vorgesehen sind, mit welchen zum Besäumen des zwischen Gegenhalter und Stempel eingespannten Filterelementes ein Randsaum unter Hitzeeinwirkung aufschmelzbar und verfestigbar ist.

Dabei besteht eine weitere mögliche Ausführungsform darin, dass eine Dreheinrichtung vorgesehen ist, mit welcher das zwischen dem Gegenhalter und dem Stempel eingespannte Filterelement relativ zu der Heizeinrichtung drehbar ist. Alternativ ist die Heizeinrichtung im Rahmen linear bewegbar, während Gegenhalter und Stempel beim Besäumen feststehen. Die Heizeinrichtung kann in Segmenten über den gesamten Umfang ausgebildet sein.

Zum Durchführen einer automatischen Fertigung ist es nach der Erfindung bevorzugt, dass eine Zuführeinrichtung zum Zuführen des Filtermediums und eine Abführeinrichtung zum Abführen des beschnittenen Filterelementes vorgesehen sind. Die Zuführeinrichtung und die Abführeinrichtung können insbesondere Greifarme mit geeigneter Saugeinrichtung sein, welche zum Aufnehmen elastischer Filterelemente geeignet sind.

Mit dieser erfindungsgemäßen Vorrichtung kann insbesondere das zuvor beschriebene Verfahren durchgeführt und die in diesem Zusammenhang beschriebenen Vorteile erreicht werden.

Die Erfindung wird nachfolgend anhand von bevorzugten Ausführungsbeispielen weiter beschrieben, welche stark schematisiert in den beigefügten Zeichnungen dargestellt sind. In den Zeichnungen zeigen:
- Fig. 1:: eine stark schematisierte Querschnittsansicht durch eine erfindungsgemäße Vorrichtung;
- Fig. 2:: eine schematisierte Seiten-Querschnittsansicht der Vorrichtung von Fig. 1;
- Fig. 3:: eine stark schematisierte Prinzipskizze zum Aufbau einer weiteren erfindungsgemäßen Vorrichtung und
- Fig. 4:: eine schematische Teilquerschnittsansicht durch eine Filtervorrichtung mit einem Filterelement nach der Erfindung.

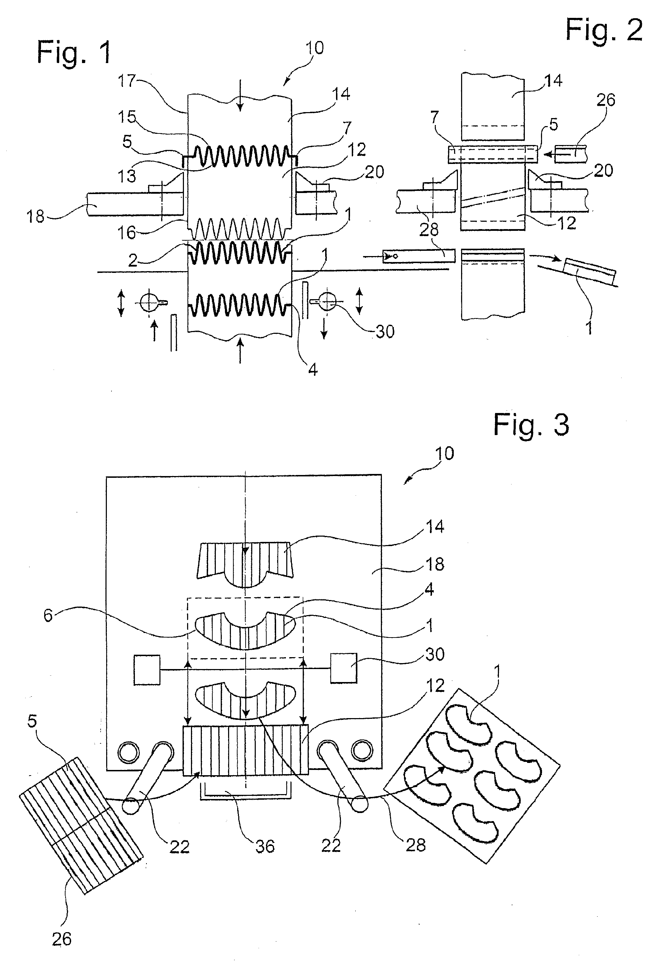

Eine Vorrichtung 10 zum Herstellen eines konturierten plissierten Filterelementes 1 aus einem plissierten vorbeschnittenen Filtermedium 5 ist in Fig. 1 und Fig. 2 in verschiedenen Betriebszuständen verdeutlicht. Die Vorrichtung 10 umfasst einen unteren Gegenhalter 12 und einen dazu axial verfahrbaren Stempel 14. Der Gegenhalter 12 und der Stempel 14 weisen jeweils eine erste Oberflächenstruktur 13 beziehungsweise eine zweite Oberflächenstruktur 15 mit einem Zackenmuster auf, welches an ein Faltenmuster 2 des zu beschneidenden Filtermediums 5 angepasst ist. Das Filtermedium 5 kann so zwischen Gegenhalter 12 und Stempel 14 formgenau eingespannt werden, wobei ein Randabschnitt 7 des Filtermediums 5 gegenüber einem ersten Seitenrand 16 des Gegenhalters 12 und einem zweiten Seitenrand 17 des Stempels 14 nach außen vorsteht. Der erste Seitenrand 16 und der zweite Seitenrand 17 entsprechen einer Kontur des herzustellenden Filterelementes 1 und verlaufen bündig zueinander. Der Gegenhalter 12 und der Stempel 14 mit dem eingespannten Filtermedium 5 werden relativ zu einer umgebenden ringförmigen Schneidmatrize 20 verfahren, dessen Schneidkante unmittelbar an den beiden Seitenrändern 16, 17 anliegt. Durch eine Relativbewegung wird der nach außen vorstehende Randabschnitt 7 abgeschnitten, wobei das Filterelement 1 mit einer definierten Randkontur gebildet wird. Die Seitenränder 16, 17 können dabei zum Erzielen einer scherenartigen Schneidwirkung zusammen mit der Schneidmatrize 20 schneidenartige Randkanten aufweisen.

Durch eine weitere axiale Relativbewegung zu einer Heizeinrichtung 30 kann ein Randsaum 4 des beschnittenen Filterelementes 1 besäumt, insbesondere beflammt werden. Hierbei wird das aus einem thermoplastischen Material bestehende Filterelement 1 entlang des Randsaumes 4 aufgeschmolzen. Insbesondere ein schichtförmig aufgebautes Filterelement 1 erhält so eine Stabilisierung und Verfestigung im Randbereich.

Anschließend kann das eingespannte Filterelement 1 zu einer Auswurfposition verfahren werden, wobei durch axiales Auseinanderfahren von Gegenhalter 12 und Stempel 14 das beschnittene und besäumte Filterelement 1 aus der Vorrichtung 10 entnommen werden kann. Dies kann über eine Abführeinrichtung 28 mit einem seitlich verfahrbaren Ausstoßer erfolgen. Die Abführeinrichtung 28 kann bei der Darstellung nach den Figuren 1 und 2 unterhalb der ringförmigen Schneideinrichtung und einer darüber angeordneten Zuführeinrichtung 26 zum Zuführen des zu konturierenden Filtermediums 5 angeordnet sein.

Eine ähnliche, jedoch abweichende Vorrichtung 10 ist Fig. 3 zu entnehmen. Ein rechteckiges Filtermedium 5 als Ausgangswerkstück wird von einer Palette über eine nicht näher dargestellte Zuführeinrichtung 26 auf einen Gegenhalter 12 aufgelegt. Anschließend wird das Filtermedium 5 durch axiales Verfahren mittels angedeuteter Stellzylinder 22 formgenau zwischen dem Gegenhalter 12 und einem von oben zugeführten Stempel 14 eingespannt. Das plissierte Filtermedium 5 wird, wie oben beschrieben, beschnitten und im gezeigten Ausführungsbeispiel mit einer etwa C-förmigen Kontur 6 versehen. Noch während das beschnittene und konturierte Filterelement 1 zwischen Gegenhalter 12 und Stempel 14 eingespannt ist, wird ein Randsaum 4 des Filterelementes 1 mittels einer Heizeinrichtung 30 beflammt, so dass der Randsaum 4 aufgeschmolzen und nach Abkühlen verfestigt wird. Zum Besäumen können an das eingespannte Filterelement 1 auf einer Haltereinrichtung 36 Segmente der Heizeinrichtung 30 linear an den Randsaum 4 in Betriebsposition zugestellt werden.

Nach Abschluss des Besäumens werden Gegenhalter 12 und Stempel 14 axial auseinander gefahren. Über eine nicht näher dargestellte Abführeinrichtung 28 wird das beschnittene Filterelement 1 aus der Vorrichtung 10 zu einer Palette abgeführt.

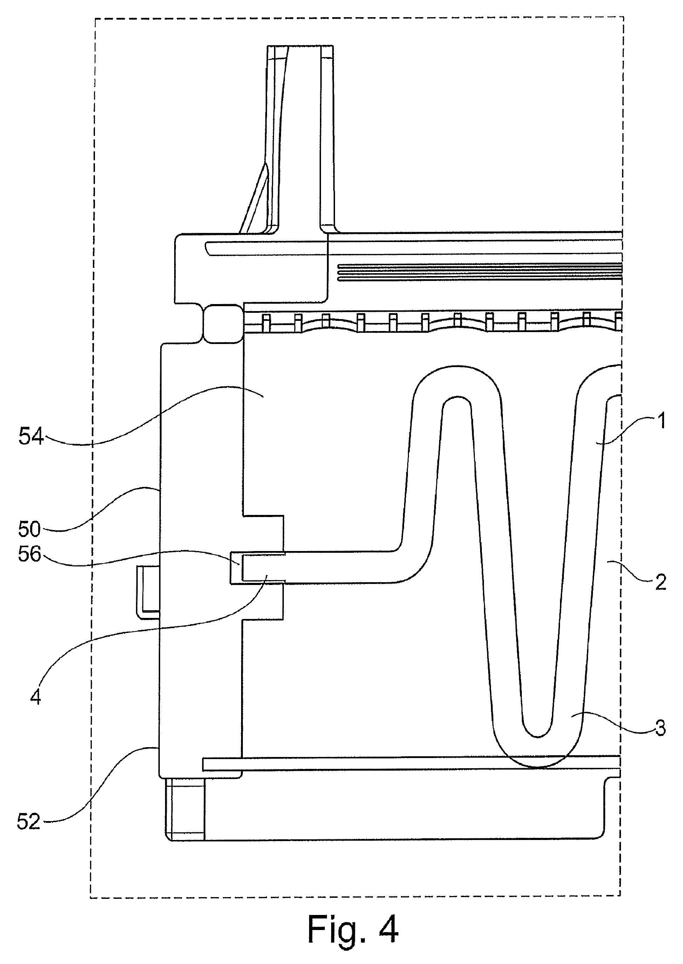

Fig. 4 zeigt eine Filtervorrichtung 50, in welche ein erfindungsgemäß beschnittenes und besäumtes plissiertes Filterelement 1 eingebaut ist. Das plissierte Filterelement 1 weist ein Faltenmuster 2 mit Falten 3 sowie einen äußeren Randsaum 4 auf, welcher nach dem vorbeschriebenen Verfahren aufgeschmolzen und stabilisiert worden ist.

Aufgrund dieser erfindungsgemäßen Besäumung kann das Filterelement 1 mit einem definierten, stabilen Randsaum 4 formgenau in einen Aufnahmeschlitz 46 an einer Innenseite eines Gehäuses 52 der Filtervorrichtung 50 angeordnet werden. Hierzu ist an der Innenseite des Gehäuses 52 ein Halteabsatz 54 ausgebildet, in welchem der Aufnahmeschlitz 56 vorgesehen ist.

## Patentansprüche

1. Verfahren zum Herstellen eines konturierten plissierten Filterelementes (1), bei welchem
- ein plissiertes Filtermedium (5) aus einem thermoplastischen Kunststoff und mit einem Faltenmuster (2) zwischen einem Gegenhalter (12) und einem Stempel (14) formgenau eingespannt wird, wobei der Gegenhalter (12) und der Stempel (14) eine an das Faltenmuster (2) angepasste Oberflächenstruktur (13, 15) und jeweils einen Seitenrand (16, 17) aufweisen, welcher einer gewünschten Kontur (6) des herzustellenden Filterelementes (1) entspricht, und
- das eingespannte Filterelement (1) entlang dem Seitenrand (16, 17) aus dem Filtermedium (5) mit der gewünschten Kontur (6) mittels eines Schneidwerkzeugs (20) ausgeschnitten wird,
**dadurch gekennzeichnet,**
**dass** als Schneidwerkzeug (20) ein Stanzmesser verwendet wird, welches zum Beschneiden ausschließlich axial zu dem eingespannten Filtermedium (5) verfahren wird,
**dass** ein Stanzmesser mit einer beliebigen geschlossenen Ringkontur verwendet wird, welche der gewünschten Kontur (6) des Filterelementes (1) entspricht, und dass zum Besäumen ein Randsaum (4) des beschnittenen Filterelementes (1) unter Hitzeeinwirkung aufgeschmolzen und verfestigt wird, während das Filterelement (1) zwischen dem Gegenhalter (12) und dem Stempel (14) eingespannt ist.

2. Verfahren nach Anspruch 1,
**dadurch gekennzeichnet,**
**dass** zumindest eine Randkante des Gegenhalters (12) oder des Stempels (14) als eine Schneidkante ausgebildet ist.

3. Verfahren nach Anspruch 1 oder 2,
**dadurch gekennzeichnet,**
**dass** ein Filtermedium (5) aus Polyamid verwendet wird.

4. Verfahren nach einem der Ansprüche 1 bis 3,
**dadurch gekennzeichnet,**
**dass** das Filterelement (1) mit einer C-förmigen Kontur (6) ausgebildet wird.

5. Verfahren nach einem der Ansprüche 1 bis 4,
**dadurch gekennzeichnet,**
**dass** zum Besäumen eine Heizeinrichtung (30) und/oder ein Laser eingesetzt wird.

6. Verfahren nach einem der Ansprüche 1 bis 5,
**dadurch gekennzeichnet,**
**dass** die Heizeinrichtung (30) linear an das eingespannte Filterelement (1) zum Besäumen zugestellt wird.

7. Verfahren nach einem der Ansprüche 1 bis 6,
**dadurch gekennzeichnet,**
**dass** nach dem Besäumen der Gegenhalter (12) und der Stempel (14) axial auseinander gefahren werden und das beschnittene und besäumte Filterelement (1) ausgeworfen wird.

8. Vorrichtung zum Herstellen eines konturierten plissierten Filterelementes (1), insbesondere nach einem Verfahren nach einem der Ansprüche 1 bis 7,
mit einem Gegenhalter (12) und einem Stempel (14), welche zum formgenauen Einspannen eines plissierten Filtermediums (5) mit einer Oberflächenstruktur (13, 15) versehen sind, welche an ein Faltenmuster (2) des plissierten Filtermediums (5) angepasst sind und jeweils einen Seitenrand (16, 17) aufweisen, welcher einer gewünschten Kontur (6) des herzustellenden Filterelementes (1) entspricht, und
mit einem Schneidwerkzeug (20) zum Ausschneiden des eingespannten Filterelementes (1) entlang dem Seitenrand (16, 17) mit der gewünschten Kontur (6) aus dem Filtermedium (5),
**dadurch gekennzeichnet,**
**dass** das Schneidwerkzeug (20) als Stanzmesser ausgebildet ist, welches beim Beschneiden ausschließlich axial zu dem eingespannten Filtermedium (5) verfahrbar ist,
**dass** das Stanzmesser mit einer beliebigen geschlossenen Ringkontur versehen ist, welche der gewünschten Kontur (6) des Filterelementes (1) entspricht, und dass eine Heizeinrichtung (30) und/oder ein Laser vorgesehen sind, mit welchen zum Besäumen des zwischen Gegenhalter (12) und Stempel (14) eingespannten Filterelementes (1) ein Randsaum (4) unter Hitzeeinwirkung aufschmelzbar und verfestigbar ist.

9. Vorrichtung nach Anspruch 8,
**dadurch gekennzeichnet,**
**dass** der Gegenhalter (12) und/oder der Stempel (14) in einem Rahmen (18) axial bewegbar gelagert und mittels mindestens einem Stellzylinder (22) axial verfahrbar sind.

10. Vorrichtung nach Anspruch 8 oder 9,
**dadurch gekennzeichnet,**
**dass** eine Zuführeinrichtung (26) zum Zuführen des Filtermediums (5) und eine Abführeinrichtung (28) zum Abführen des beschnittenen Filterelementes (1) vorgesehen sind.

## Claims

1. Method for producing a contoured pleated filter element (1), in which
- a pleated filter medium (5) consisting of a thermoplastic and having a pleat pattern (2) is clamped to an exact fit between a counterholder (12) and a punch (14), wherein the counterholder (12) and the punch (14) have a surface structure (13, 15) adapted to the pleat pattern (2) and a side margin (16, 17) each, which corresponds to a desired contour (6) of the filter element (1) to be produced, and
- by means of a cutting tool (20) the clamped filter element (1) is cut along the side margin (16, 17) out of the filter medium (5) with the desired contour (6),
**characterized in that**
as cutting tool (20) a punching knife is used which, for the purpose of cutting, is solely displaced axially to the clamped filter medium (5),
**in that** a punching knife with a random closed annular contour is used that corresponds to the desired contour (6) of the filter element (1), and
**in that** for trimming a marginal rim (4) of the cut filter element (1) is melted under the effect of heat and consolidated while the filter element (1) is clamped between the counterholder (12) and the punch (14).

2. Method according to claim 1,
**characterized in that**
at least one marginal edge of the counterholder (12) or the punch (14) is designed as a cutting edge.

3. Method according to claim 1 or 2,
**characterized in that**
a filter medium (5) consisting of polyamide is used.

4. Method according to any one of claims 1 to 3,
**characterized in that**
the filter element (1) is designed with a C-shaped contour (6).

5. Method according to any one of claims 1 to 4,
**characterized in that**
for trimming a heating means (30) and/or a laser is employed.

6. Method according to any one of claims 1 to 5,
**characterized in that**
the heating means (30) is fed in a linear manner to the clamped filter element (1) for trimming.

7. Method according to any one of claims 1 to 6,
**characterized in that**
after trimming the counterholder (12) and the punch (14) are moved axially apart and the cut and trimmed filter element (1) is ejected.

8. Device for producing a contoured pleated filter element (1), in particular in accordance with a method according to any one of claims 1 to 7,
with a counterholder (12) and a punch (14) which, for the purpose of clamping a pleated filter medium (5) to an exact fit, are provided with a surface structure (13, 15) that is adapted to a pleat pattern (2) of the pleated filter medium (5) and each have a side margin (16, 17) which corresponds to a desired contour (6) of the filter element (1) to be produced, and
with a cutting tool (20) for cutting the clamped filter element (1) along the side margin (16, 17) out of the filter medium (5) with the desired contour (6), **characterized in that**
the cutting tool (20) is designed as a punching knife which, for the purpose of cutting, is solely displaceable axially to the clamped filter medium (5),
**in that** the punching knife is provided with a random closed annular contour that corresponds to the desired contour (6) of the filter element (1),
and
**in that** a heating means (30) and/or a laser are provided, with which, for the purpose of trimming the filter element (1) clamped between counterholder (12) and punch (14), a marginal rim (4) can be melted under the effect of heat and consolidated.

9. Device according to claim 8,
**characterized in that**
the counterholder (12) and/or the punch (14) are supported in an axially movable manner in a frame (18) and are axially displaceable by means of at least one positioning cylinder (22).

10. Device according to claim 8 or 9,
**characterized in that**
a supply means (26) for supplying the filter medium (5) and a discharge means (28) for discharging the cut filter element (1) are provided.

## Revendications

1. Procédé de fabrication d'un élément filtrant (1) plissé doté d'un contour, selon lequel:
- un milieu filtrant (5) plissé, constitué d'une matière plastique thermoplastique et comportant un motif de pliage (2), est serré avec des dimensions précises entre un contre-support (12) et un poinçon (14), le contre-support (12) et le poinçon (14) comprenant une structure de surface (13, 15) adaptée au motif de pliage (2) et, chacun respectivement, un bord latéral (16, 17) qui correspond à un contour souhaité (6) de l'élément filtrant (1) à fabriquer, et
- l'élément filtrant (1) serré est, à partir du milieu filtrant (5), découpé avec le contour souhaité (6) le long du bord latéral (16, 17) au moyen d'un outil de coupe (20),
**caractérisé :**
**en ce que**, comme outil de coupe (20), on utilise un couteau de découpe qui, pour la coupe, est déplacé uniquement de manière axiale vers le milieu filtrant (5) plissé,
**en ce qu'**on utilise un couteau de découpe avec un contour annulaire fermé quelconque qui correspond au contour souhaité (6) de l'élément filtrant (1), et
**en ce que**, pour l'ourlage, un ourlet de bordure (4) de l'élément filtrant (1) découpé est fondu sous l'action de la chaleur puis solidifié, pendant que l'élément filtrant (1) est serré entre le contre-support (12) et le poinçon (14).

2. Procédé selon la revendication 1,
**caractérisé :**
**en ce qu'**au moins une arête de bordure du contre-support (12) ou du poinçon (14) est constituée en tant qu'arête de coupe.

3. Procédé selon la revendication 1 ou 2,
**caractérisé :**
**en ce qu'**on utilise un milieu filtrant (5) en polyamide.

4. Procédé selon une des revendications 1 à 3,
**caractérisé :**
**en ce que** l'élément filtrant (1) est formé avec un contour (6) en forme de C.

5. Procédé selon une des revendications 1 à 4,
**caractérisé :**
**en ce que**, pour l'ourlage, un dispositif de chauffage (30) et/ou un laser est/sont mis en oeuvre.

6. Procédé selon une des revendications 1 à 5,
**caractérisé :**
**en ce que**, pour l'ourlage, le dispositif de chauffage (30) est présenté de manière linéaire à l'élément filtrant (1).

7. Procédé selon une des revendications 1 à 6,
**caractérisé :**
**en ce que**, après l'ourlage, le contre-support (12) et le poinçon (14) sont écartés l'un de l'autre de manière axiale et l'élément filtrant (1) découpé et ourlé est éjecté.

8. Dispositif de fabrication d'un élément filtrant (1) plissé doté d'un contour, plus particulièrement selon un procédé conforme à l'une des revendications 1 à 7,
avec un contre-support (12) et un poinçon (14), qui, pour le serrage - avec des dimensions précises - d'un milieu filtrant (5) plissé, sont munis d'une structure de surface (13, 15), celles-ci étant adaptées à un motif de pliage (2) du milieu filtrant (5) plissé et comprenant chacune respectivement un bord latéral (16, 17) qui correspond à un contour souhaité (6) de l'élément filtrant (1) à fabriquer, et avec un outil de coupe (20) pour la découpe de l'élément filtrant (1) serré, le long du bord latéral (16, 17), à partir du milieu filtrant (5) et avec le contour (6) souhaité,
**caractérisé :**
**en ce que** l'outil de coupe (20) est formé d'un couteau de découpe qui, pour la coupe, est déplaçable uniquement de manière axiale vers le milieu filtrant (5) plissé,
**en ce que** le couteau de découpe est muni d'un contour annulaire fermé quelconque qui correspond au contour souhaité (6) de l'élément filtrant (1), et
**en ce qu'**un dispositif de chauffage (30) et/ou un laser est/sont prévus, avec lesquels, pour l'ourlage de l'élément filtrant (1) serré entre le contre-support (12) et le poinçon (14), un ourlet de bordure (4) peut être fondu sous l'action de la chaleur puis solidifié.

9. Dispositif selon la revendication 8,
**caractérisé :**
**en ce que** le contre-support (12) et/ou le poinçon (14) est/sont logés dans un châssis (18) en étant déplaçables de manière axiale et peuvent être déplacés de manière axiale au moyen d'au moins un vérin de réglage (22).

10. Dispositif selon la revendication 8 ou 9,
**caractérisé :**
**en ce qu'**un dispositif d'alimentation (26) est prévu pour l'introduction du milieu filtrant (5), ainsi qu'un dispositif d'évacuation (28) pour l'évacuation de l'élément filtrant (1) découpé.
